# EUROPEAN PATENT SPECIFICATION

(11) **EP 4 279 719 B1**
(45) Date of publication and mention of the grant of the patent: **20.08.2025**
(21) Application number: 23174348.5
(22) Date of filing: 19.05.2023
(51) Int. Cl.: F02C 3/22, F02C 7/141, F02C 3/30, F02K 3/06

(54) **HYDROGEN STEAM INJECTED TURBINE ENGINE WITH COOLED COOLING AIR**
WASSERSTOFFDAMPFEINSPRITZTURBINENMOTOR MIT GEKÜHLTER KÜHLLUFT
MOTEUR À TURBINE À INJECTION DE VAPEUR D'HYDROGÈNE AVEC REFROIDISSEMENT DE L'AIR DE REFROIDISSEMENT

(30) Priority: 19.05.2022 US 202263343612 P
(43) Date of publication of application: 22.11.2023
(73) Proprietor: RTX Corporation, Farmington, CT 06032 (US)
(72) Inventor: STAUBACH, Joseph B., Colchester, 06415 (US); SOBANSKI, Jon Erik, Glastonbury, 06033 (US)
(74) Representative: Dehns

(56) References cited:
- EP-B1- 3 048 281
- US-A1- 2021 207 500

## Description

### TECHNICAL FIELD

The present disclosure relates generally to a hydrogen powered aircraft propulsion system and, more particularly to hydrogen steam injected and intercooled turbine engine.

### BACKGROUND

Reduction and/or elimination of carbon emissions generated by aircraft operation is a stated goal of aircraft manufacturers and airline operators. Gas turbine engines compress incoming core airflow, mix the compressed airflow with fuel that is ignited in a combustor to generate a high energy exhaust gas flow. Some energy in the high energy exhaust flow is recovered as it is expanded through a turbine section. Even with the use of alternate fuels, a large amount of energy in the form of heat is simply exhausted from the turbine section to atmosphere. The lost heat reduces the overall efficiency of the engine.

Turbine engine manufacturers continue to seek further improvements to engine performance including improvements to reduce environmental impact while improving propulsive efficiencies.

US 2021/207500 A1 relates to an exhaust gas treatment device that utilizes an exhaust gas energy and reduces contrails produced by a condensation following an expansion, an aircraft propulsion system having such an exhaust gas treatment device, and to a method for treating an exhaust gas stream.

### SUMMARY

A propulsion system for an aircraft according to an aspect of the invention is as claimed in claim 1.

In another embodiment of the foregoing propulsion system, the cooled cooling air system includes a mixer configured to mix a cooling airflow with water to generate a mixed cooling air flow.

In another embodiment of any of the foregoing propulsion systems, the mixer includes at least one nozzle configured to inject a water flow into the cooling airflow.

In another embodiment of any of the foregoing propulsion systems, a boost pump for increasing a pressure of water provided to the mixer.

In another embodiment of any of the foregoing propulsion systems, water is transformed into a steam flow within the cooling evaporator.

In another embodiment of any of the foregoing propulsion systems, the steam flow from the cooling evaporator is communicated to a steam turbine.

In another embodiment of any of the foregoing propulsion systems, an intercooling system is configured to inject water into the compressor section.

In another embodiment of any of the foregoing propulsion systems, an intercooler evaporator is configured to transform water to steam prior to injection into the compressor section.

In another embodiment of any of the foregoing propulsion systems, the condenser communicates water to the water storage tank and a first pump is configured to move water from the storage tank to the cooled cooling air system.

In another embodiment of any of the foregoing propulsion systems, the turbine section includes a low pressure turbine configured to drive a fan through a low shaft.

In another embodiment of any of the foregoing propulsion systems, the turbine section includes a low pressure turbine, a high pressure turbine and an intermediate pressure turbine and the compressor section includes a high pressure compressor coupled to the high pressure turbine through a high shaft and a low pressure compressor coupled to the intermediate pressure turbine through an intermediate shaft.

In another embodiment of any of the foregoing propulsion systems, a steam turbine is driven by the steam flow from the evaporator, the steam turbine coupled to at least one of a low shaft, the high shaft and the intermediate shaft.

In another embodiment of any of the foregoing propulsion systems, a gearbox is coupled to the low shaft for driving a fan at a speed lower than the low pressure turbine.

Although the different aspects of the invention have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example propulsion system embodiment.
Figure 2 is a simplified schematic view of the example propulsion system embodiment.

### DETAILED DESCRIPTION

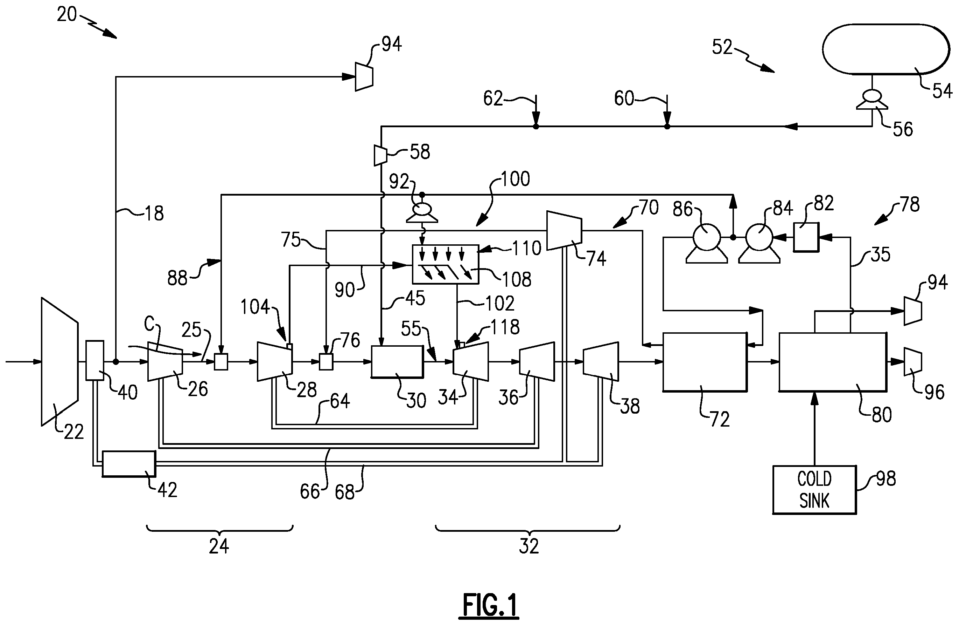

Figure 1 schematically illustrates an example hydrogen steam injected intercooled turbine engine that is generally indicated at 20. The engine 20 includes a core engine with a core airflow path C through a fan 22, a compressor section 24, a combustor 30 and a turbine section 32. The fan 22 drives inlet air as a core flow 25 into the compressor section 24. In the compressor section 24, the core flow 25 is compressed and communicated to a combustor 30. In the combustor 30, the core flow 25 is mixed with a hydrogen (H₂) fuel flow 45 and ignited to generate a high energy gas flow 55 that expands through the turbine section 32 where energy is extracted and utilized to drive the fan 22 and the compressor section 24. A bypass flow 18 may flow through the fan 22, bypass the remaining components of the engine 20, and exit through a fan nozzle 94. The high energy gas flow 55 is exhausted from the turbine section 32 and communicated to a steam generation system 70 and a water recovery system 78 before being exhausted through a core nozzle 96.

The example compressor section 24 includes a low pressure compressor (LPC) 26 and a high pressure compressor (HPC) 28. The turbine section 32 includes a high pressure turbine (HPT) 34, an intermediate pressure turbine (IPT) 36, and a low pressure turbine (LPT) 38. The turbines 34, 36 and 38 are coupled to a corresponding compressor section. In this disclosed example, the high pressure turbine is coupled by a high shaft 64 to drive the high pressure compressor 28. An intermediate shaft 66 couples the intermediate turbine 36 to the low pressure compressor 26.

A low shaft 68 is coupled to the low pressure turbine 38 and a gearbox 40 to drive the fan 22. The low shaft 68 may further be coupled to an electric machine 42 that is configured to impart and/or extract power into the low shaft 68. The example gearbox 40 is an epicyclical gear train, such as a planetary gear system, star gear system or other known gear system, with a gear reduction ratio of greater than about 2.3.

The engine 20 is configured to burn hydrogen provide by a fuel system 52. The fuel system 52 includes a liquid hydrogen (LH₂) tank 54 in communication with at least one pump 56. The pump 56 drives a fuel flow 45 to the combustor 30. LH₂ provides a thermal heat sink that can be utilized to cool various heat loads within the aircraft indicated at 60 and in the engine as indicated at 62. The heat loads may include, for example and without limitation, super conducting electrics, a working fluid of an environmental control system of the aircraft, an air conditioning heat exchanger, and engine working fluid heat exchangers. Heat accepted into the hydrogen fuel flow increase the overall fuel temperature prior to injection into the combustor 30.

A hydrogen expansion turbine 58 may be provided to reduce the pressure of the LH₂ fuel flow through expansion prior to communication to the combustor 30. Expansion in the expansion turbine 58 provides for the temperatures and pressures of the fuel flow to enter the combustor 30 as a gas and not a liquid.

The steam injection system 70 uses the exhaust heat to generate a steam flow 106 by evaporating high pressure water through an evaporator 72. The generated steam may then be injected into compressed core airflow at a location 76 for communication into the combustor 30 to improve performance by increasing turbine mass flow and power output without additional work required by the compressor section. In one example embodiment the location 76 is upstream of the combustor 30. Steam flow from the evaporator 72 may drive a steam turbine 74 to provide an additional work output prior to injection into the combustor 30.

The water recovery system 78 draws water, schematically indicated at 35, from the high energy gas flow 55 and communicates the recovered water to water storage tank 82. The water storage tank 82 operates as an accumulator to provide sufficient water for operation during various engine operating conditions. A condenser/water separator 80 is provided downstream of the turbine section 32 and the evaporator 72. The condenser/separator 80 is in communication with a cold sink, schematically indicated at 98 for the condenser/separator 80 may be, for example, ram or fan air depending on the application and/or engine configuration.

The engine 20 has an increased power output from the injected steam 106 due to an increasing mass flow through the turbine section 32 without a corresponding increase in work from the compressor section 24. An example engine operation cycle may include up to (or more than) 35% steam-air-ratios (SAR) and may be assisted by a multiple fold (e.g., 2x, 3x, etc.) increase in moisture from burning H₂ as the fuel.

The water recovery system 78 includes the water storage tank 82 that receives water from the condenser/water separator 80 and provides for the accumulation of a volume of water required for production of sufficient amounts of steam. Water recovered from the exhaust gas flow is driven by a low pressure pump 84 and a high pressure pump 86 to the evaporator 72.

A water intercooling flow 88 may be communicated to the compressor section 24 to reduce a temperature of the core airflow 25 and increase mass flow. Reduced temperatures and increased mass flow provided by injection of water increases compressor efficiency. The intercooling flow 88 mixes water to cool and increase the mass of the core airflow 25 through the compressor section 24. Heating and boiling of water injected into the core airflow 25 lowers the temperature of the core airflow 25 and increases the mass flow through subsequent portions of the compressor section 24.

A cooled cooling air system 100 is schematically shown that provides a cooling airflow to an inlet 118 in the turbine section 32. In this disclosed example, the inlet 118 is disposed in the HPT 34. Air flow 90 from a tap 104 in the compressor section 24 is communicated to the HPT 34 to cool components exposed to increased temperatures of the exhaust gas flow 55. Although the example tap 104 is disposed in the HPC 28, the tap 104 may be located anywhere within the compressor section 24 with pressures corresponding to pressure encountered in the turbine section 32.

The cooling air 90 from the tap 104 is cooled in a mixer 108 that mixes an airflow 90 communicated from a tap 104 in the compressor section 24 with a water flow from the water tank 82. A booster pump 92 is provided to drive the water into the mixer 108. The example mixer 108 includes a plurality of nozzles 110 to inject water into the cooling airflow 90 to generate a mixed airflow 102 that is communicated to the inlet 118. Heat from the cooling air 90 will vaporize the water flow and cool the mixed flow 102 to a temperature lower than exhausted from the compressor section 24. The lower temperature provided by the mixed airflow 102 can provide for a reduced amount of cooling airflow that needs to be tapped from the compressor section 24. Reducing the amount of flow tapped from the compressor section 24 provides for more of the work performed by the compressor section 24 to be utilized for generation of the exhaust gas flow.

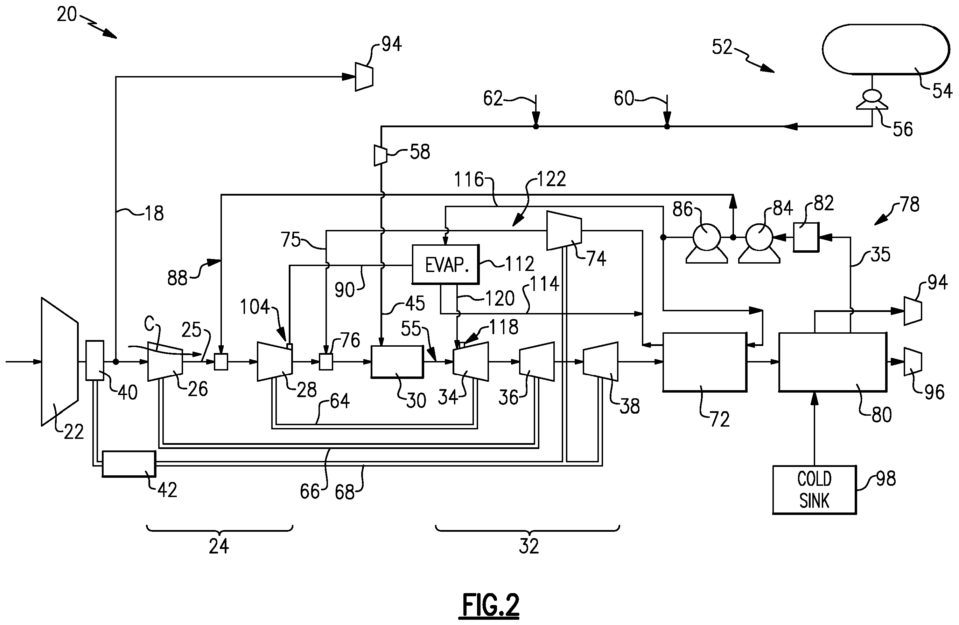

Referring to Figure 2, another example cooled cooling air system 122 is schematically shown and includes a cooling evaporator 112. The cooling evaporator 112 places the cooling airflow 90 tapped from the compressor section 24 into thermal communication with a water flow 116. The heat from the tapped cooling air flow 106 vaporizes the water flow 116 in the evaporator 112 to create a steam flow 114. The steam flow 114 is communicated to the steam generation system. A cooled cooling air flow 120 that is exhausted from the cooling evaporator 112 is communicated to the inlet 118 to cool the turbine 34. Steam generated cooling evaporator 112 may be communicated to a steam turbine 74 to produce additional shaft power. Accordingly, the generation of steam in the cooling evaporator 112 both cools the cooling air flow 120 and recaptures energy in the form of heat that is utilized to drive the steam turbine 74. Accordingly, the work produced by increasing the pressure of the cooling airflow 90 is recaptured and provides for increases in overall engine operating efficiencies.

Although the example engine 20 is described and shown by way of example as a three spool engine, other engine configurations, such as two-spool may also benefit from this disclosure and are within the contemplation and scope of this disclosure.

Although an example engine configuration is described by way of example, it will be appreciated that other engine configurations may include additional structures and features and are within the contemplation and scope of this disclosure.

Accordingly, the disclosed assemblies provide for the advantageous use of hydrogen fuel to improve engine efficiency and reduce carbon emission. The disclosed systems use the advantageous thermal capacity of hydrogen to maximize the recapture of heat and cool other working flows of the engine.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A propulsion system for an aircraft comprising:
a core engine (20) including a core flow path (25) where air is compressed in a compressor section (24), communicated to a combustor (30), mixed with a hydrogen fuel and ignited to generate an exhaust gas flow (55) that is expanded through a turbine section (32);
a hydrogen fuel system (52) configured to supply hydrogen fuel to the combustor (30) through a fuel flow path (45);
a condenser (80) arranged along the core flow path (25) and configured to extract water (35) from the exhaust gas flow (55);
an evaporator (72) arranged along the core flow path (25) and configured to receive a portion of the water (35) extracted by the condenser (80) to generate a steam flow, wherein the steam flow is injected into the core flow path (25) upstream of the turbine section (32); and
a cooled cooling air system (100) configured to use water (35) extracted from the exhaust gas flow (55) for cooling a cooling airflow (90) communicated to the turbine section (32), wherein the cooled cooling air system (100) includes a cooling evaporator (112) in thermal communication with the cooling airflow (90) for cooling the cooling airflow (90).

2. The propulsion system as recited in claim 1, wherein the cooled cooling air system (100) includes a mixer (108) configured to mix the cooling airflow (90) with water (35) to generate a mixed cooling air flow (102).

3. The propulsion system as recited in claim 2, wherein the mixer (108) includes at least one nozzle (110) configured to inject a water flow into the cooling airflow (90).

4. The propulsion system as recited in claim 2 or 3, including a boost pump (92) for increasing a pressure of water provided to the mixer (108).

5. The propulsion system as recited in any preceding claim, wherein water is transformed into a steam flow (114) within the cooling evaporator (112).

6. The propulsion system as recited in claim 5, wherein the steam flow (114) from the cooling evaporator (112) is communicated to a steam turbine (74).

7. The propulsion system as recited in any preceding claim, further comprising an intercooling system (88) configured to inject water into the compressor section (24).

8. The propulsion system as recited in claim 7, including an intercooler evaporator configured to transform water to steam prior to injection into the compressor section (24).

9. The propulsion system as recited in any preceding claim, including a water storage tank (82), wherein the condenser (80) communicates water to the water storage tank (82), and a first pump (84) is configured to move water from the storage tank (82) to the cooled cooling air system (100).

10. The propulsion system as recited in any preceding claim, wherein the turbine section (32) includes a low pressure turbine (38) configured to drive a fan (22) through a low shaft (68).

11. The propulsion system as recited in claim 10, including a gearbox (40) coupled to the low shaft (68) for driving the fan (22) at a speed lower than the low pressure turbine (38).

12. The propulsion system as recited in any preceding claim, wherein the turbine section (32) includes a or the low pressure turbine (38), a high pressure turbine (34) and an intermediate pressure turbine (36) and the compressor section (24) includes a high pressure compressor (28) coupled to the high pressure turbine (34) through a high shaft (64) and a low pressure compressor (26) coupled to the intermediate pressure turbine (36) through an intermediate shaft (66).

13. The propulsion system as recited in claim 12, including a or the steam turbine (74) driven by the steam flow from the evaporator (72; 112), the steam turbine (74) coupled to a or the low shaft (68), the high shaft (64), and/or the intermediate shaft (66).

## Patentansprüche

1. Antriebssystem für ein Luftfahrzeug, umfassend:
einen Kernmotor (20), der einen Kernströmungspfad (25) beinhaltet, in dem Luft in einem Verdichterabschnitt (24) verdichtet wird, zu einer Brennkammer (30) weitergeleitet wird, mit Wasserstoffbrennstoff gemischt und gezündet wird, um einen Abgasstrom (55) zu erzeugen, der durch einen Turbinenabschnitt (32) expandiert wird;
ein Wasserstoffbrennstoffsystem (52), das zum Versorgen der Brennkammer (30) mit Wasserstoffbrennstoff durch einen Brennstoffströmungspfad (45) konfiguriert ist;
einen Kondensator (80), der entlang des Kernströmungspfads (25) angeordnet und zum Extrahieren von Wasser (35) aus dem Abgasstrom (55) konfiguriert ist;
einen Verdampfer (72), der entlang des Kernströmungspfads (25) angeordnet und zum Aufnehmen eines Teils des durch den Kondensator (80) extrahierten Wassers (35) konfiguriert ist, um einen Dampfstrom zu erzeugen, wobei der Dampfstrom in den Kernströmungspfad (25) stromaufwärts des Turbinenabschnitts (32) eingespritzt wird; und
ein gekühltes Kühlluftsystem (100), das zum Verwenden von aus dem Abgasstrom (55) extrahiertem Wasser (35) zum Kühlen eines Kühlluftstroms (90) konfiguriert ist, der an den Turbinenabschnitt (32) weitergeleitet wird, wobei das gekühlte Kühlluftsystem (100) einen Kühlverdampfer (112) in thermischer Verbindung mit dem Kühlluftstrom (90) zum Kühlen des Kühlluftstroms (90) beinhaltet.

2. Antriebssystem nach Anspruch 1, wobei das gekühlte Kühlluftsystem (100) einen Mischer (108) beinhaltet, der zum Mischen des Kühlluftstroms (90) mit Wasser (35) konfiguriert ist, um einen gemischten Kühlluftstrom (102) zu erzeugen.

3. Antriebssystem nach Anspruch 2, wobei der Mischer (108) mindestens eine Düse (110) beinhaltet, die zum Einspritzen eines Wasserstroms in den Kühlluftstrom (90) konfiguriert ist.

4. Antriebssystem nach Anspruch 2 oder 3, beinhaltend eine Booster-Pumpe (92) zum Erhöhen eines Drucks von dem Mischer (108) bereitgestelltem Wasser.

5. Antriebssystem nach einem der vorhergehenden Ansprüche, wobei Wasser innerhalb des Kühlverdampfers (112) in einen Dampfstrom (114) umgewandelt wird.

6. Antriebssystem nach Anspruch 5, wobei der Dampfstrom (114) von dem Kühlverdampfer (112) an eine Dampfturbine (74) weitergeleitet wird.

7. Antriebssystem nach einem der vorhergehenden Ansprüche, ferner umfassend ein Zwischenkühlsystem (88), das zum Einspritzen von Wasser in den Verdichterabschnitt (24) konfiguriert ist.

8. Antriebssystem nach Anspruch 7, beinhaltend einen Zwischenkühlerverdampfer, der zum Umwandeln von Wasser in Dampf vor der Einspritzung in den Verdichterabschnitt (24) konfiguriert ist.

9. Antriebssystem nach einem der vorhergehenden Ansprüche, beinhaltend einen Wasserspeichertank (82), wobei der Kondensator (80) zum Weiterleiten von Wasser zu dem Wasserspeichertank (82) konfiguriert ist und eine erste Pumpe (84) zum Bewegen von Wasser von dem Wasserspeichertank (82) zu dem gekühlten Kühlluftsystem (100) konfiguriert ist.

10. Antriebssystem nach einem der vorhergehenden Ansprüche, wobei der Turbinenabschnitt (32) eine Niederdruckturbine (38) beinhaltet, die zum Antreiben eines Fans (22) über eine langsame Welle (68) konfiguriert ist.

11. Antriebssystem nach Anspruch 10, beinhaltend ein mit der langsamen Welle (68) verbundenes Getriebe (40) zum Antreiben des Fans (22) mit einer Drehzahl, die niedriger ist als die der Niederdruckturbine (38).

12. Antriebssystem nach einem der vorhergehenden Ansprüche, wobei der Turbinenabschnitt (32) eine oder die Niederdruckturbine (38), eine Hochdruckturbine (34) und eine Mitteldruckturbine (36) beinhaltet und der Verdichterabschnitt (24) einen Hochdruckverdichter (28), der über eine schnelle Welle (64) an die Hochdruckturbine (34) gekoppelt ist, und einen Niederdruckverdichter (26), der über eine Zwischenwelle (66) an die Mitteldruckturbine (36) gekoppelt ist, beinhaltet.

13. Antriebssystem nach Anspruch 12, beinhaltend eine oder die Dampfturbine (74), die durch den Dampfstrom von dem Verdampfer (72; 112) angetrieben wird, wobei die Dampfturbine (74) an eine oder die langsame Welle (68), die schnelle Welle (64) und/oder die Zwischenwelle (66) gekoppelt ist.

## Revendications

1. Système de propulsion pour un aéronef comprenant :
un moteur central (20) comportant un trajet d'écoulement central (25) où l'air est comprimé dans une section de compresseur (24), communiqué à une chambre de combustion (30), mélangé avec un combustible à hydrogène et allumé pour générer un flux de gaz d'échappement (55) qui est élargi par une section de turbine (32) ;
un système de combustible à hydrogène (52) configuré pour alimenter du combustible à hydrogène à la chambre de combustion (30) à travers un trajet d'écoulement de combustible (45) ;
un condenseur (80) agencé le long du trajet d'écoulement central (25) et configuré pour extraire l'eau (35) du flux de gaz d'échappement (55) ;
un évaporateur (72) agencé le long du trajet d'écoulement central (25) et configuré pour recevoir une partie de l'eau (35) extraite par le condenseur (80) pour générer un flux de vapeur, dans lequel le flux de vapeur est injecté dans le trajet d'écoulement central (25) en amont de la section de turbine (32) ; et
un système d'air de refroidissement refroidi (100) configuré pour utiliser de l'eau (35) extraite du flux de gaz d'échappement (55) pour refroidir un flux d'air de refroidissement (90) communiqué à la section de turbine (32), dans lequel le système d'air de refroidissement refroidi (100) comporte un évaporateur de refroidissement (112) en communication thermique avec le flux d'air de refroidissement (90) pour refroidir le flux d'air de refroidissement (90).

2. Système de propulsion selon la revendication 1, dans lequel le système d'air de refroidissement refroidi (100) comporte un mélangeur (108) configuré pour mélanger le flux d'air de refroidissement (90) avec de l'eau (35) pour générer un flux d'air de refroidissement mixte (102).

3. Système de propulsion selon la revendication 2, dans lequel le mélangeur (108) comporte au moins une buse (110) configurée pour injecter un flux d'eau dans le flux d'air de refroidissement (90).

4. Système de propulsion selon la revendication 2 ou 3, comportant une pompe de suralimentation (92) pour augmenter une pression de l'eau fournie au mélangeur (108).

5. Système de propulsion selon une quelconque revendication précédente, dans lequel l'eau est transformée en un flux de vapeur (114) à l'intérieur de l'évaporateur de refroidissement (112).

6. Système de propulsion selon la revendication 5, dans lequel le flux de vapeur (114) provenant de l'évaporateur de refroidissement (112) est communiqué à une turbine à vapeur (74).

7. Système de propulsion selon une quelconque revendication précédente, comprenant également un système de refroidissement intermédiaire (88) configuré pour injecter de l'eau dans la section de compresseur (24).

8. Système de propulsion selon la revendication 7, comportant un évaporateur de refroidisseur intermédiaire configuré pour transformer l'eau en vapeur avant l'injection dans la section de compresseur (24).

9. Système de propulsion selon une quelconque revendication précédente, comportant un réservoir de stockage d'eau (82), dans lequel le condenseur (80) communique de l'eau au réservoir de stockage d'eau (82), et une première pompe (84) est configurée pour déplacer l'eau du réservoir de stockage (82) au système d'air de refroidissement refroidi (100).

10. Système de propulsion selon une quelconque revendication précédente, dans lequel la section de turbine (32) comporte une turbine basse pression (38) configurée pour entraîner un ventilateur (22) à travers un arbre bas (68).

11. Système de propulsion selon la revendication 10, comportant une boîte de vitesses (40) couplée à l'arbre bas (68) pour entraîner le ventilateur (22) à une vitesse inférieure à celle de la turbine basse pression (38).

12. Système de propulsion selon une quelconque revendication précédente, dans lequel la section de turbine (32) comporte une ou la turbine basse pression (38), une turbine haute pression (34) et une turbine à pression intermédiaire (36) et la section de compresseur (24) comporte un compresseur haute pression (28) couplé à la turbine haute pression (34) par l'intermédiaire d'un arbre haut (64) et un compresseur basse pression (26) couplé à la turbine à pression intermédiaire (36) par l'intermédiaire d'un arbre intermédiaire (66).

13. Système de propulsion selon la revendication 12, comportant une ou la turbine à vapeur (74) entraînée par le flux de vapeur provenant de l'évaporateur (72 ; 112), la turbine à vapeur (74) couplée à un ou l'arbre bas (68), l'arbre haut (64) et/ou l'arbre intermédiaire (66).
